# EUROPÄISCHE PATENTANMELDUNG

(11) **EP 1 852 174 A1**
(43) Veröffentlichungstag der Anmeldung: **07.11.2007**
(21) Anmeldenummer: 07001864.3
(22) Anmeldetag: 29.01.2007
(51) Int. Cl.: B01D 53/94, B01J 29/064, B01J 29/46, B01J 29/76

(54) **Extrudierter Vollkatalysator sowie Verfahren zu seiner Herstellung**

(30) Priorität: 02.05.2006 DE 102006020158
(71) Anmelder: Argillon GmbH, 96254 Redwitz (DE)
(72) Erfinder: Hofmann, Lothar, 96264 Altenkunstadt (DE); Münch, Jörg, 96215 Lichtenfels (DE); Dotzel, Ralf, 90489 Nürnberg (DE)
(74) Vertreter: Tergau & Pohl Patentanwälte

(57) **Zusammenfassung**

Es werden ein extrudierter Vollkatalysator zum Abbau von Stickoxiden in Gegenwart eines Reduktionsmittels sowie ein Verfahren zu seiner Herstellung angegeben. Der Vollkatalysator weist eine Katalysatormasse auf, die 60 bis 87 Gew.-% eines ionengetauschten, wenigstens ein Metall aus der Gruppe, die Cu, Hf, La, Au, V, In, Lanthanoide und Übergangsmetalle der Gruppe VIII des Periodensystems enthält, enthaltenden Zeolithen, mehr als 10 bis 37 Gew.-% Aluminiumoxid und 2 bis 10 Gew.-% anorganische Fasern umfasst. Der Zeolith enthaltende Vollkatalysator kann durch Extrusion hergestellt werden und weist eine hohe mechanische Stabilität bei guter katalytischer Aktivität auf.

## Beschreibung

Die Erfindung betrifft einen extrudierten Vollkatalysator zum Abbau von Stickoxiden in Gegenwart eines Reduktionsmittels. Die Erfindung betrifft ferner ein Verfahren zur Herstellung eines derartigen Vollkatalysators.

Zur Entfernung von Stickoxiden in einem sauerstoffhaltigen Abgas wie dem eines mit Luftüberschuss betriebenen Verbrennungsmotors, insbesondere eines Dieselmotors, sind Katalysatoren auf Basis von Titandioxid bekannt, an denen die Stickoxide in Anwesenheit von Sauerstoff mittels eines zugeführten Reduktionsmittels, wie insbesondere Ammoniak, zu molekularem Stickstoff und Wasser reduziert werden. Beispielhaft sei hierzu auf die DE 24 58 888 A1 verwiesen. Bei diesem Verfahren der selektiven katalytischen Reduktion, kurz SCR-Verfahren, wird dem Abgas vor Eintritt in den Katalysator das Reduktionsmittel oder eine sich im Abgas zu dem Reduktionsmittel umsetzende Vorläufersubstanz zugegeben. Beispielsweise ist als eine Vorläufersubstanz für das Reduktionsmittel Ammoniak Harnstoff bekannt, welcher insbesondere in Form einer wässrigen Harnstofflösung dem Abgas zugeführt wird.

Die bekannten SCR-Katalysatoren umfassen eine keramische Katalysatormasse, die als Hauptbestandteil Titandioxid und als Beimengungen Oxide von Wolfram und/oder Vanadium umfasst. Als Katalysatorkörper kommen hierzu beschichtete Katalysatoren oder Vollkatalysatoren zum Einsatz. Bei den beschichteten Katalysatoren ist die Katalysatormasse auf einem Trägermaterial wie insbesondere einem Cordierit (ein Magnesium-Alumino-Silikat der Zusammensetzung Mg₂Al₄Si₅O₁₈ mit rhombisch-dipyramidaler Struktur) aufgebracht, welches selbst katalytisch inaktiv ist. Ein Vollkatalysator hingegen ist im Ganzen aus der katalytisch aktiven Katalysatormasse gefertigt. Hierzu werden in der Regel die Ausgangsmaterialien zu einem knetbaren Schlicker verarbeitet, der zu einem durchgehende Kanäle aufweisenden Wabenkörper extrudiert wird. Anschließend wird der extrudierte Wabenkörper zu dem fertigen Vollkatalysator kalziniert.

Weiter sind als Bestandteil von SCR-Katalysatoren auch Zeolithe bekannt. Zeolithe, d.h. Gerüst-Aluminosilikate, bilden teilweise eine Struktur mit durchgehenden Kanälen eines Durchmessers in der Größenordnung von Gasmolekülen aus und eignen sich aufgrund ihrer hohen spezifischen Oberfläche insbesondere für eine selektive katalytische Reduktion.

So ist aus der DE 198 54 502 A1 ein SCR-Katalysator zum Abbau von Stickoxiden in Gegenwart eines Reduktionsmittels bekannt, der eine Titandioxid und einen Zeolithen umfassende Aktivmasse aufweist, wobei der Zeolith ein Wasserstoff-lon getauschter, saurer Zeolith ist.

Auch aus der GB 2 193 655 A ist ein Katalysator zum Abbau von Stickoxiden gemäß dem SCR-Verfahren bekannt. Die Katalysatormasse des dort angegebenen Katalysators umfasst ein Titandioxid mit niedriger spezifischer Oberfläche sowie einen durch Ionenaustausch erhaltenen, Kupfer enthaltenden Zeolithen. Als bevorzugte Zeolithe werden Mordenit, ZSM-5 und Ferrierit angegeben.

Weiter ist aus der EP 0 393 917 A2 ein Katalysator zum Abbau von Stickoxiden bekannt, dessen Katalysatormasse einen Zeolithen umfasst, welcher nach lonenaustausch Kupfer und/oder Eisen enthält. Als bevorzugte Zeolithe werden USY(Ultra Stabilized Y), Beta und ZSM-20 angegeben.

Des Weiteren ist aus der EP 0 219 854 A2 ein Katalysator bekannt, der Titandioxid in der Anatas-Modifikation sowie einen säurestabilisierten Zeolithen in der Wasserstoff- oder in der Ammonium-Form umfasst.

Die im genannten Stand der Technik angegebenen Katalysatoren sollen sowohl als beschichtete Katalysatoren als auch als Vollkatalysatoren herstellbar sein.

Schließlich ist auch aus der US 5,271,913 A ein Katalysator zum Abbau von Stickoxiden nach dem SCR-Verfahren bekannt, dessen Katalysatormasse einen Zeolithen umfasst. Der Zeolith ist hierbei mit Ceroxid oder Eisenoxid imprägniert. Der angegebene Katalysator soll eine hohe Beständigkeit hinsichtlich schwefeliger Komponenten aufweisen. Als bevorzugter Zeolith wird ein Zeolith vom ZSM-5-Typ angegeben.

Ein Vollkatalysator zeigt gegenüber einem beschichteten Katalysator im Allgemeinen eine höhere Langzeitstabilität hinsichtlich seiner katalytischen Aktivität. Zur Verbesserung der katalytischen Aktivität ist die Verwendung eines Zeolithen für einen SCR-Katalysator von Vorteil. Nachteiligerweise hat es sich jedoch gezeigt, dass ein SCR-Vollkatalysator mit einer einen Zeolithen enthaltenden Katalysatormasse gemäß Stand der Technik eine ungenügende mechanische Stabilität aufweist. Zudem ist die Extrusion der einen Zeolithen umfassenden Ausgangsmasse zu einem Wabenkörper wegen mangelnder Fließfähigkeit und Festigkeit problematisch.

Es ist Aufgabe der Erfindung, einen einen Zeolithen umfassenden SCR-Vollkatalysator anzugeben, der durch Extrusion herstellbar ist und eine möglichst hohe mechanische Stabilität aufweist. Weiter ist es Aufgabe der Erfindung, ein Herstellungsverfahren für einen derartigen SCR-Vollkatalysator aufzuzeigen.

Die erstgenannte Aufgabe wird erfindungsgemäß gelöst durch einen extrudierten Vollkatalysator zum Abbau von Stickoxiden in Gegenwart eines Reduktionsmittels, der eine Katalysatormasse aufweist, die 60 bis 87 Gew.-% eines ionengetauschten, wenigstens ein Metall aus der Gruppe, die Cu, Hf, La, Au, In, V, Lanthanoide und Übergangsmetalle der Gruppe VIII des Periodensystems enthält, enthaltenden Zeolithen, mehr als 10 bis 37 Gew.-% Aluminiumoxid und 2 bis 10 Gew.-% anorganische Fasern umfasst.

Die Erfindung geht dabei von der Überlegung aus, dass die bislang ungenügend hohe mechanische Stabilität von Zeolith enthaltenden SCR-Vollkatalysatoren durch eine ungenügende Bindung der Zeolith-Partikel bedingt ist. Umfangreiche Untersuchungen haben nun ergeben, dass die Bindung der Zeolith-Partikel untereinander durch ein Aluminiumoxid bewirkt werden kann, welches gewissermaßen als ein anorganischer Binder wirkt. Mit anderen Worten sind im angegebenen Vollkatalysator die einzelnen Zeolith-Partikel über das Aluminiumoxid fest miteinander verbunden. Sind in dem Vollkatalysator 60 bis 87 Gew.-% des ionengetauschten Zeolithen, mehr als 10 bis 37 Gew.-% Aluminiumoxid und 2 bis 10 Gew.-% anorganische Fasern umfasst, so zeigt der Vollkatalysator bei einer ausreichenden SCR-Aktivität eine für den Langzeiteinsatz genügende hohe mechanische Stabilität.

Liegen die Gewichtsanteile des Zeolithen, des Aluminiumoxids und der anorganischen Fasern in den angegebenen Bereichen, so kann der Vollkatalysator durch Extrusion einer Aufschlämmung der Ausgangsmaterialien hergestellt werden. Die auf das Herstellungsverfahren gerichtete zweite Aufgabe wird hierzu erfindungsgemäß dadurch gelöst, dass als Ausgangsmaterialien der Zeolith, das Aluminiumoxid oder eine Vorläufersubstanz des Aluminiumoxids, jeweils in Pulverform, mit den anorganischen Fasern vermischt und gegebenenfalls unter Zugabe eines organischen Hilfsmittels in einer wässrigen, sauren oder alkalischen Lösung durch Rühren und/oder Kneten zu einer plastischen Mischung verarbeitet werden, die Mischung zu einem Katalysatorkörper extrudiert, der Katalysatorkörper getrocknet und zu dem Vollkatalysator bei einer Temperatur zwischen 550°C und 650°C kalziniert wird, wobei die Ausgangsmaterialien in einem derartigen Mengenverhältnis eingesetzt werden, dass der Vollkatalysator 60 bis 87 Gew.-% des ionengetauschten, wenigstens ein Metall aus der Gruppe, die Cu, Hf, La, Au, In, V, Lanthanoide und Übergangsmetalle der Gruppe VIII des Periodensystems enthält, enthaltenden Zeolithen, mehr als 10 - 37 Gew.-% Aluminiumoxid und 2 - 10 Gew.-% anorganische Fasern umfasst.

Bei dem Zeolithen kann es sich sowohl um einen natürlichen als auch um einen synthetischen Zeolithen handeln. Dabei wird unter einem Zeolithen ein Gerüst-Aluminosilikat verstanden, wobei das Verhältnis der Sauerstoff-Atome zur Summe der Aluminium- und Silizium-Atome 2 : 1 beträgt. Durch Austausch von einigen Silizium-Atomen der Oxidationsstufe IV durch Aluminium-Atome der Oxidationsstufe III erhält das Gerüst oder die Gerüststruktur im Ganzen einen negative Ladung. Diese negative Ladung wird durch sich in der Gerüststruktur befindende, austauschbare Kationen ausgeglichen.

Ein Zeolith zeichnet sich weiter dadurch aus, dass die Gerüststruktur Poren mit charakteristischer Porenweite aufweist. Zeolithe werden bezüglich des Molverhältnisses von Siliziumoxid zu Aluminiumoxid oder nach der aufgrund dieses Verhältnis charakteristischen Gerüststruktur klassifiziert.

Ein natürlicher Zeolith ist beispielsweise Mordenit oder ein Chabazit. Synthetische Zeolithe sind beispielsweise A-, X- und Y-Zeolithe, welche synthetische Formen von Mordenit darstellen, ein ZSM-5- (Markenname eines synthetischen Zeolithen, hergestellt durch Mobil Oil Company Ltd.), ein USY- (ultra stabilized Y) oder ein Beta-Zeolith. Als Literatur wird hierbei auf Kirk-Othmer, "Encyclopedia of Chemical Technology", 3.Auflage, Band 15, John Wiley & Sons, New York, 1981, Seiten 640 bis 669, verwiesen. Zur Klassifikation der Zeolithe wird weiter auf den Artikel "Chemical Nomenclature and Formulation of Compositions of Synthetic and Natural Zeolites" von R. M. Barrer, Pure Appl. Chem. 51 (1979), Seiten 1091 bis 1100 hingewiesen. Die Struktur einzelner Zeolithe kann insbesondere auch aus "Zeolith-Atlas: Atlas of Zeolite Framework Types", 5. Auflage, Ch. Baerlocher, W. M. Meier und D. H. Olson, Amsterdam, Elsevier (2001) entnommen werden.

In einer vorteilhaften Ausführungsform enthält der Zeolith wenigstens ein Metall aus der Gruppe, die Fe, Cu, Ce, Hf, La, Pt, Au, In, V, Ir, Ru und Os enthält. Mit diesen in den Zeolithen eingebrachten Metallen kann eine gute katalytische Aktivität in einem angemessenen Temperaturbereich erzielt werden.

Zur Herstellung des Vollkatalysators kann der extrudierte mit durchgehenden Kanälen ausgestattete Katalysatorkörper beispielsweise in einem Temperaturbereich zwischen 20° und 100°C getrocknet werden. Die Trocknung kann jedoch auch mittels Mikrowelle oder durch Gefriertrocknung erfolgen.

Als anorganische Fasern können sowohl keramische Fasern als auch Glasfasern eingesetzt werden. Dabei sind Glasfasern aufgrund ihres Kostenvorteils bevorzugt.

Als organische Hilfsmittel können an sich die aus der Keramikverarbeitung bekannten Binde-, Füll-, Gleit- und Plastifizierungsmittel eingesetzt werden, die bei der Kalzinierung "ausgebrannt" werden. Als ein Binde- und Füllmittel eignet sich insbesondere Zellulose. Als ein organischer Plastifizierer kann insbesondere ein wasserlösliches Harz zugegeben werden. Die Zugabe von Zellulose erhöht die für eine katalytische Aktivität vorteilhafte Porosität des Vollkatalysators, da die Zellulose zunächst in der wässrigen Suspension aufquillt, beim Vorgang des Kalzinierens aber vollständig zersetzt wird. Der organische Plastifizierer wird eingesetzt, um die Extrudierbarkeit der wässrigen Aufschlämmung zu verbessern. Als ein wasserlösliches Harz bietet sich beispielsweise ein Polyethylenoxid- oder ein Polyethylenglykol-Polymer an.

Es hat sich gezeigt, dass die Vermischung der Ausgangsmaterialien in einer wässrigen sauren oder alkalischen Lösung vorteilhaft für die Bindung der einzelnen Partikel untereinander ist. Insbesondere wird hierdurch eine für die Extrudierbarkeit der Ausgangsmasse gewünschte Fließfähigkeit erreicht. Die Extrudierbarkeit der Ausgangsmasse wird insbesondere verbessert, wenn die Ausgangsmaterialien in einer essigsauren Lösung mit einen pH-Wert zwischen 3 und 4 oder in einer ammoniakalischen Lösung mit einem pH-Wert zwischen 8 und 9 verarbeitet werden.

Eine besonders gute Bindungswirkung des extrudierten Vollkatalysators wird erzielt, wenn das als anorganischer Binder wirkende Aluminiumoxid ein γ-Al₂O₃ ist. Unter einem γ-Al₂O₃ wird das kubisch-flächenzentriert kristallisierte Aluminiumoxid verstanden.

Das für die Bindung der Zeolith-Partikel untereinander erforderliche Aluminiumoxid lässt sich insbesondere durch die Verwendung einer Vorläufersubstanz in den Ausgangsmaterialien erwirken. Eine derartige Vorläufersubstanz wird während des Herstellungsverfahrens in das die Zeolith-Partikel verbindende Aluminiumoxid umgewandelt bzw. umgesetzt. Eine derartige Vorläufersubstanz kann beispielsweise eine Aluminiumhydroxid, z.B. ein Böhmit, ein Gibbsit oder ein Bayerit sein. Insbesondere ist es vorteilhaft, für das Aluminiumoxid als Vorläufersubstanz ein Böhmit einzusetzen, welches von der Struktur seiner Grundbausteine sehr gut zu der Struktur der Zeolith-Partikel passt. Unter einem Böhmit wird dabei die orthorhombische Struktur des Aluminiummedahydroxids AIO(OH) verstanden. Das Böhmit wandelt sich unter den bei der Herstellung des Vollkatalysators herrschenden Bedingungen in das γ-Al₂O₃ um.

Hinsichtlich der katalytischen Aktivität des Vollkatalysators ist es erstrebenswert, einen möglichst hohen Anteil des Zeolithen zu erreichen. Allerdings nimmt hiermit zwangsläufig die Menge des für die mechanische Stabilität verantwortlichen Aluminiumoxids ab. Eine hohe katalytische Aktivität bei ausreichender mechanischer Stabilität wird vorteilhafterweise dann erzielt, wenn die Katalysatormasse 70 bis 85 Gew.-% Zeolith und 12 bis 25 Gew.-% Aluminiumoxid umfasst.

Bekanntermaßen nimmt die Stabilität des Zeolithen mit Erhöhung des Mol-Verhältnisses von Siliziumoxid zu Aluminiumoxid zu. Für die mechanische Stabilität des extrudierten Vollkatalysators ist es vorteilhaft, wenn der verwendete Zeolith ein Zeolith mit einem Mol-Verhältnis von Siliziumoxid zu Aluminiumoxid von 10 bis 50 ist.

Der ionengetauschte Zeolith zeigt mit den angegebenen Elementen eine genügend hohe SCR-Aktivität. Insbesondere weist der Vollkatalysator eine hohe SCR-Aktivität auf, wenn der Zeolith Eisen, Kupfer und/oder Cer enthält. Vorteilhafterweise ist der ionengetauschte Zeolith ein Eisen enthaltender Zeolith, wobei der Anteil des Eisens im Zeolith zwischen 1 und 9 Gew.-% der Zeolith-Masse beträgt.

Dabei sind ca. 1 Gew.-% des Eisens durch Ionenaustausch an den Zeolithen gebunden, während der übrige Anteil des Eisens dem Zeolithen aufgrund der offenporigen Struktur angelagert ist. Dieses gewissermaßen freie Eisen erhöht in vorteilhafter Weise die mechanische Stabilität des Zeolithen und damit des Vollkatalysators und verbessert zudem die Säurebeständigkeit. Insofern ist ein einen solchen Zeolithen umfassender Vollkatalysator für die Entstickung insbesondere in schwefelhaltigen Abgasen geeignet. Der hohe Eisengehalt in dem Zeolithen kann durch Druckeinstellung bei der Einbringung des Eisens beispielsweise mittels einer Eisennitrat-Lösung erzielt werden. Auch ist eine Festkörpereinbringung bzw. ein Festkörperionenaustausch mittels Eisensulfat möglich, wie dies beispielsweise in der DE 198 20 515 A1 beschrieben ist. Bezüglich des Eisens hat es sich weiter gezeigt, dass ein hoher Eisen-Gehalt die SCR-Aktivität bei hohen Abgastemperaturen noch verbessert.

Aufgrund der durchgehenden Kanäle, deren Durchmesser die Größenordnung von Gasmolekülen aufweisen, eignet sich als ein Zeolith für den extrudierten Vollkatalysator insbesondere ein Faujasit, ein Ferrierit, ein Y-, ein Beta- ein ZSM-5-, ein ZSM-20- oder ein MCM-41-Zeolith. Vorteilhafterweise ist der Zeolith ein Zeolith des Typs ZSM-5 oder Beta. Diese Zeolithe zeigen eine für die SCR-Reaktion geeignete Struktur und Oberflächencharakteristik. Zeolith-Partikel dieses Typs lassen sich insbesondere gut durch Verwendung eines Böhmits als Vorläufersubstanz des Aluminiumoxids untereinander binden.

In einer weiteren Ausführungsvariante enthält die Katalysatormasse zusätzlich bis zu 5 Gew.-% wenigstens eines Elemente aus der Gruppe, die Cu, Hf, La, Au, V, Mn, Lanthanoide und Übergangsmetalle der Gruppe VIII des Periodensystems enthält, die an das Aluminiumoxid angebunden sind. Insbesondere sind die Elemente aus einer Gruppe auszuwählen, die Fe, Cu, Au, V, Mn, Hf, La, Ir, Ru, Os und In enthält. Die zusätzlichen Elemente werden an den anorganischen Binder angebunden, so dass dieser die zusätzliche Funktionalität einer katalytischen Aktivität erhält. Hierdurch kann die katalytische Aktivität des Vollkatalysators weiter verbessert werden. Die Einbringung der zusätzlichen Elemente in oder an das Aluminiumoxid kann prinzipiell dadurch erfolgen, dass bei der Herstellung der Mischung der Ausgangsmaterialien dieser Mischung beispielsweise eine Lösung von wasserlöslichen Salzen der angegebenen Metalle beigemengt wird. So kann beispielsweise zur Einbringung des Eisens eine Eisennitratlösung verwendet werden.

Um eine Anbindung an das Aluminiumoxid zu gewährleisten, kann vorteilhafterweise zunächst das Aluminiumoxid oder die Vorläufersubstanz des Aluminiumoxids mit einer wässrigen Lösung eines wasserlöslichen Metallsalzes versetzt werden, bevor die weiteren Ausgangsmaterialien zugefügt werden.

Ausführungsformen der Erfindung werden durch die folgenden beiden Beispiele näher erläutert:

### Beispiel 1:

Als ein Zeolith wird ein ionengetauschter synthetischer ZSM-5-Zeolith verwendet, der in der Zeolith-Masse 5 Gew.-% an Eisen enthält. Der pulverförmige ZSM-5-Zeolith wird mit Glasfasern und ebenfalls pulverförmigem synthetischen Böhmit vermischt und unter Zugabe von Zellulose, des Plastifizierers Zusoplast (ein Markenname der Zschimmer & Schwarz GmbH & Co KG)und des organischen Hilfsmittels Polyox (ein Markenname der Dow Chemicals) in einer essigsauren wässrigen Lösung von einem pH-Wert von 3,5 zu einer plastischen und fließfähigen Mischung verarbeitet. Die Mengenanteile der Ausgangsmaterialien sind dabei so bemessen, dass der resultierende Vollkatalysator 71 Gew.-% Zeolith, 24 Gew.-% γ-Al₂O₃ und 5 Gew.-% an Glasfasern umfasst. Die plastische Mischung wird zu einem wabenförmigen, durchgehende Kanäle aufweisenden Katalysatorkörper mit einem runden Querschnitt extrudiert, der eine Zelldichte von 300 cpsi (celles per square inch) aufweist. Anschließend wird der Katalysatorkörper bei einer Temperatur von 90° getrocknet und zu dem Vollkatalysator bei einer Temperatur von 600°C kalziniert. Der fertige Vollkatalysator weist eine Anströmfläche mit einem Durchmesser von etwa 14 cm und eine Durchströmungslänge von etwa 19 cm auf.

Drei der auf diese Weise hergestellten Vollkatalysatoren werden parallel in den Abgasstrom eines Nutzfahrzeugdieselmotors mit Abgasturboaufladung eingesetzt. Der Dieselmotor weist hierbei ein Hubvolumen von 12 I bei einer Leistung von maximal 300 kW auf. Das Abgas des Dieselmotors weist entsprechend unterschiedlicher Betriebszustände einen Sauerstoffgehalt zwischen 3 und 15%, einen Wassergehalt zwischen 4 und 12% und einen Kohlendioxidgehalt zwischen 4 und 12% auf. Bei verschiedenen typischen Betriebsbedingungen des Dieselmotors wird der Stickoxid-Umsatz durch die eingebauten Vollkatalysatoren als Verhältnis der Stickoxidkonzentration vor und nach dem Katalysator bei verschiedenen Temperaturen und bei verschiedener Zudosierung an Ammoniak gemessen.

Das Ergebnis ist der Tabelle 1 zu entnehmen:

**Tabelle 1**

| **Temperatur in °C** | **Umsatz 1 in %** | **Umsatz 2 in %** | **NOₓ**-Konzentration In ppm |
|---|---|---|---|
| 230 | 79 | 86 | 304 |
| 312 | 81 | 92 | 1017 |
| 312 | 63 | 61 | 565 |
| 401 | 68 | 82 | 1370 |
| 512 | 46 | 68 | 1372 |
| 690 | 50 | 73 | 964 |

Dabei wurde Umsatz 1 mit einer entsprechend dem Stickoxid-Gehalt überstöchiometrischen Zudosierung des Ammoniaks derart gemessen, dass das Abgas nach dem Vollkatalysator noch 10 ppm Restammoniak aufweist. Umsatz 2 wurde bei einer überstöchiometrischen Zudosierung mit einem Restammoniak-Gehalt von 50 ppm ermittelt. Die dem jeweils eingestellten Betriebszustand des Dieselmotors entsprechende NOₓ-Konzentration im Abgas ist der rechten Spalte zu entnehmen.

Man erkennt einen hohen Umsatz der Stickoxide in einem Temperaturbereich des Abgases zwischen etwa 200°C und 400°C. Selbst bei hohen Temperaturen wird noch eine Reduktion der Stickoxide um etwa 50% und um etwa 70% bei der niedrigen bzw. der höheren überstöchiometrischen Zudosierung des Ammoniaks erzielt.

Der Vollkatalysator gemäß Beispiel 1 weist eine hohe mechanische Stabilität auf. Trotz des hohen Zeolith-Anteils lässt sich die plastische Mischung der Ausgangsmaterialien leicht zu dem Katalysatorkörper extrudieren, wobei insbesondere der extrudierte Katalysatorkörper die zur Weiterverarbeitung notwendige Stabilität aufweist.

### Beispiel 2:

Gemäß Beispiel 1 wird ein weiterer Vollkatalysator hergestellt. Dabei wird jedoch als Zeolith nicht ein ionengetauschter ZSM-5-Zeolith, sondern ein ionengetauschter Beta-Zeolith verwendet. Der Beta-Zeolith enthält 5 Gew.-% an Eisen. Die Ausgangsmaterialien werden entsprechend Beispiel 1 derart gemischt, dass der fertige Vollkatalysator 60 Gew.-% des Beta-Zeolithen, 5 Gew.-% Glasfasern und 35 Gew.-% des Aluminiumoxids umfasst.

Über den kalzinierten Vollkatalysator wird ein Laborabgas definierter Zusammensetzung geleitet. Dabei werden Abgasverhältnisse entsprechend typischer Betriebszustände eines Verbrennungsmotors simuliert. Das Laborabgas enthält hierzu neben Stickstoff bei hohen Abgastemperaturen 900 ppm NO und wird mit einem hohen Volumenstrom über den Katalysator geleitet. Bei niedrigeren Abgastemperaturen werden 600 ppm NO zugeführt, wobei das Abgas mit niedrigerem Volumenstrom über den Vollkatalysator geleitet wird. An restlichen Komponenten sind in unveränderten Anteilen 10 Vol.-% Sauerstoff und 7 Vol.-% Wasser zugesetzt. Das Laborabgas umfasst weiter Ammoniak mit einem Verhältnis zwischen NO und NH₃ von 0,9. Das Laborabgas wird bei insgesamt sechs unterschiedlichen Temperaturen über den Vollkatalysator geleitet. Der Umsatz des Vollkatalysators wird gemessen als das Verhältnis der Konzentration von NO vor und nach dem Vollkatalysator im Abgas. Das Ergebnis ist der Tabelle 2 zu entnehmen.

**Tabelle 2**

| **Volumenstrom in m³/h** | **Konz. NO in ppm** | **Temperatur in °C** | **Umsatz NO in %** |
|---|---|---|---|
| 3,7 | 900 | 550 | 78,5 |
| 3,7 | 900 | 475 | 80,3 |
| 3.7 | 900 | 400 | 79,3 |
| 3.7 | 900 | 325 | 62,9 |
| 1,5 | 600 | 250 | 49,3 |
| 1,5 | 600 | 200 | 22,5 |

Wie der Tabelle 2 zu entnehmen ist, weist der Vollkatalysator gemäß Beispiel 2 eine hohe Umsetzrate im Temperaturbereich oberhalb von 300°C auf. Bei sehr niedrigen Temperaturen des Abgases fällt die katalytische Aktivität ab. Dennoch werden selbst bei 200°C noch mehr als 20% des enthaltenen NO umgesetzt. Dabei ist insbesondere zu beachten, dass bei Hinzufügung von NO₂ zu dem Laborabgas die Aktivität des Vollkatalysators erheblich gesteigert wird. Bei den gemessenen Aktivitäten handelt es sich um Minimalaktivitäten, die die Umsetzung von NO betreffen.

## Patentansprüche

1. Extrudierter Vollkatalysator zum Abbau von Stickoxiden in Gegenwart eines Reduktionsmittels, mit einer Katalysatormasse, die 60 bis 87 Gew.-% eines ionengetauschten, wenigstens ein Metall aus der Gruppe, die Cu, Hf, La, Au, In, V, Lanthanoide und Übergangsmetalle der Gruppe VIII des Periodensystems enthält, enthaltenden Zeolithen, mehr als 10 bis 37 Gew.-% Aluminiumoxid und 2 bis 10 Gew.-% anorganische Fasern umfasst.

2. Vollkatalysator nach Anspruch 1,
wobei der Zeolith wenigstens ein Metall enthält aus der Gruppe, die Fe, Cu, Ce, Hf, La, Pt, Au, In, V, Ir, Ru und Os enthält.

3. Vollkatalysator nach Anspruch 1 oder 2,
wobei das Aluminiumoxid ein γ-Al₂O₃ ist.

4. Vollkatalysator nach einem der vorhergehenden Ansprüche,
wobei das Aluminiumoxid durch Beimengung eines Aluminiumhydroxids, insbesondere eines Böhmits, zu den Ausgangsmaterialien hergestellt ist.

5. Vollkatalysator nach einem der vorhergehenden Ansprüche,
wobei die Katalysatormasse 70 bis 85 Gew.-% Zeolith und 12 bis 25 Gew.-% Aluminiumoxid umfasst.

6. Vollkatalysator nach einem der vorhergehenden Ansprüche,
wobei der Zeolith ein Zeolith mit einem Molverhältnis von Siliziumoxid zu Aluminiumoxid von 10 bis 50 ist.

7. Vollkatalysator nach einem der vorhergehenden Ansprüche,
wobei der Zeolith ein ionengetauschter, Fe enthaltender Zeolith ist, wobei der Anteil des Eisens (Fe) im Zeolith zwischen 1 und 9 Gew.-% der Zeolith-Masse beträgt.

8. Vollkatalysator nach einem der vorhergehenden Ansprüche,
wobei der Zeolith ein Zeolith des Typs ZSM-5 oder Beta ist.

9. Vollkatalysator nach einem der vorhergehenden Ansprüche,
wobei die Katalysatormasse zusätzlich bis zu 5 Gew.-% wenigstens eines der Elemente der Gruppe, die Cu, Hf, La, Au, V, Mn, Lanthanoide und die Übergangsmetalle der Gruppe VIII des Periodensystems enthält, insbesondere Fe, Cu, Au, V, Mn, Hf, La, Ir, Ru, Os und In, die an das Aluminiumoxid angebunden sind.

10. Verfahren zur Herstellung eines Vollkatalysators,
wobei als Ausgangsmaterialien ein Zeolith und ein Aluminiumoxid oder eine Vorläufersubstanz des Aluminiumoxids, jeweils in Pulverform, mit anorganischen Fasern vermischt und gegebenenfalls unter Zugabe eines organischen Hilfsmittels in einer wässrigen sauren oder alkalischen Lösung durch Rühren und/oder Kneten zu einer plastischen Mischung verarbeitet werden, die Mischung zu einem Katalysatorkörper extrudiert, der Katalysatorkörper getrocknet und zu dem Vollkatalysator bei einer Temperatur zwischen 550 und 650 °C kalziniert wird, und wobei die Ausgangsmaterialien in einem derartigen Mengenverhältnis eingesetzt werden, dass der Vollkatalysator 60 bis 87 Gew.-% eines ionengetauschten, wenigstens ein Metall aus der Gruppe, die Cu, Hf, La, Au, In, V, Lanthanoide und Übergangsmetalle der Gruppe VIII des Periodensystems enthält, enthaltenden Zeolithen, mehr als 10 bis 37 Gew.-% Aluminiumoxid und 2 bis 10 Gew.-% anorganische Fasern umfasst.

11. Verfahren nach Anspruch 10,
wobei die Ausgangsmaterialien in einem derartigen Mengenverhältnis eingesetzt werden, dass der Vollkatalysator 60 bis 87 Gew.-% eines ionengetauschten, wenigstens ein Metall aus der Gruppe, die Fe, Cu, Ce, Hf, La, Pt, Au, In, V, Ir, Ru und Os enthält, enthaltenden Zeolithen umfasst.

12. Verfahren nach Anspruch 10 oder 11,
wobei als Vorläufersubstanz ein Aluminiumhydroxid, insbesondere ein Böhmit, zugegeben wird.

13. Verfahren nach einem der Ansprüche 10 bis 12,
wobei die Ausgangsmaterialien in einem derartigen Mengenverhältnis eingesetzt werden, dass der Vollkatalysator 70 bis 85 Gew.-% Zeolith und 12 bis 25 Gew.-% Aluminiumoxid umfasst.

14. Verfahren nach einem der Ansprüche 10 bis 13,
wobei als Zeolith ein Zeolith mit einem Molverhältnis von Siliziumoxid zu Aluminiumoxid von 10 bis 50 eingesetzt wird.

15. Verfahren nach einem der Ansprüche 10 bis 14,
wobei als Zeolith ein ionengetauschter, Fe enthaltender Zeolith verwendet wird, wobei der Anteil des Eisens (Fe) im Zeolith zwischen 1 bis 9 Gew.-% der Zeolith-Masse beträgt.

16. Verfahren nach einem der Ansprüche 10 bis 15,
wobei als Zeolith ein Zeolith des Typs ZSM-5 oder Beta verwendet wird.

17. Verfahren nach einem der Ansprüche 10 bis 16,
wobei die Ausgangsmaterialien mit einer Lösung wenigstens eines der Elemente aus der Gruppe, die Cu, Hf, La, Au, V, Mn, Lanthanoide und Übergangsmetalle der Gruppe VIII des Periodensystems enthält, insbesondere Fe, Cu, Au, V, Mn, Hf, La, Ir, Ru, Os und In, in Form ihrer Salze derart versetzt werden, dass der Vollkatalysator bis zu 5 Gew.-% dieser Elemente umfasst.

18. Verfahren nach Anspruch 17,
wobei zuerst das Aluminiumoxid mit der Lösung versetzt und anschließend der Zeolith und die anorganischen Fasern beigemengt werden.

19. Verfahren nach einem der Ansprüche 10 bis 18,
wobei als organisches Hilfsmittel Zellulose und/oder ein organischer Plastifizierer, insbesondere ein wasserlösliches Harz, zugegeben wird.

20. Verfahren nach einem der Ansprüche 10 bis 19,
wobei die Ausgangsmaterialien in einer essigsauren Lösung mit einem pH-Wert zwischen 3 und 4 oder in einer ammoniakalischen Lösung mit einem pH-Wert zwischen 8 und 9 verarbeitet werden.
